# EUROPÄISCHE PATENTSCHRIFT

(11) **EP 0 662 382 B1**
(45) Veröffentlichungstag und Bekanntmachung des Hinweises auf die Patenterteilung: **01.04.1998**
(21) Anmeldenummer: 94116313.1
(22) Anmeldetag: 17.10.1994
(51) Int. Cl.: B29C 45/50

(54) **Einspritzaggregat für eine Spritzgiessmaschine**
Injection unit for an injection moulding machine
Unité d'injection pour une machine à mouler par injection

(30) Priorität: 23.12.1993 DE 4344335
(43) Veröffentlichungstag der Anmeldung: 12.07.1995
(73) Patentinhaber: Krauss-Maffei Aktiengesellschaft, 80997 München (DE)
(72) Erfinder: Pickel, Herbert, Dr., D-82152 Planegg (DE)

(56) Entgegenhaltungen:
- DE-U- 9 200 502
- PATENT ABSTRACTS OF JAPAN vol. 11, no. 125 (M-582) (2572) 18. April 1987 & JP-A-61 266 218 (SUMITOMO HEAVY IND LTD)
- PATENT ABSTRACTS OF JAPAN vol. 9, no. 294 (M-431) (2017) 20. November 1985 & JP-A-60 132 721 (FANUC)
- PATENT ABSTRACTS OF JAPAN vol. 18, no. 354 (M-1632) 5. Juli 1994 & JP-A-06 091 709 (SODICK CO LTD)
- PATENT ABSTRACTS OF JAPAN vol. 18, no. 186 (M-1585) 30. März 1994 & JP-A-05 345 337 (SODICK CO LTD)

## Beschreibung

Die Erfindung betrifft ein Einspritzaggregat für Spritzgießmaschinen gemäß Oberbegriff des Anspruchs 1.

Eine Spritzgießmaschine dieser Art ist aus der JP-A-61 266 218 bekannt, bei der der Schneckenantrieb aus zwei Elektromotoren besteht, von denen ein Motor zur Durchführung der Drehbewegung der Schnecke und ein Motor zur Durchführung der Axialbewegung der Schnecke vorgesehen ist. Die beiden Elektromotore sind mit ihren Achsen fluchtend zur Achse der Schnecke angeordnet, wobei der dem Schneckengehäuse zugeordnete Motor als Hohlwellenmotor ausgebildet ist und eine Spindelmutter aufweist, die mit einer Bewegungsspindel im Gewindeeingriff steht, die an einem Ende mit der Schnecke verbunden ist. Bei dieser Anordnung von Elektromotoren ist der Motor für die Axialbewegung der Schnecke so anzusteuern, daß diese während des Plastifiziervorganges, der durch Drehung der Schnecke durch den anderen Motor bewerkstelligt wird, dem Staudruck des plastifizierten thermoplastischen Materials standhält.

Der Erfindung liegt demgegenüber die Aufgabe zugrunde, bei einem Einspritzaggregat der genannten Art, dieses so zu vereinfachen, daß zum Halten des während der Plastifizierphase auf die Schnecke wirkenden Staudruckes keine elektrische Ansteuerung des die Axialbewegung der Schnecke durchführenden Elektromotors erforderlich ist.

Diese Aufgabe wird durch die kennzeichnenden Merkmale des Anspruchs 1 gelöst.

Die beim Plastifizieren auf die Schnecke wirkende Staubelastung wird selbsttätig durch die hydraulische Einrichtung gehalten ohne daß es dazu einer Ansteuerung des die Axialbewegung der Schnecke durchführenden Elektromotors bedarf. Mit Hilfe des Druckproportionalventils wird die Einstellung des gewünschten Staudruckes sichergestellt.

Vorzugsweise sind die Motore als Transversalflußmotore ausgebildet, die sich durch ein hohes Drehmoment auszeichnen und die zum einen eine für die Zwecke nach der Erfindung günstige kurze bzw. scheibenförmige Bauform aufweisen und zum anderen im Inneren der Hohlwelle mit weitem lichten Durchmesser ausgeführt werden können.

Weitere vorteilhafte Ausgestaltungen und Maßnahmen der Erfindung sind in den Unteransprüchen angegeben.

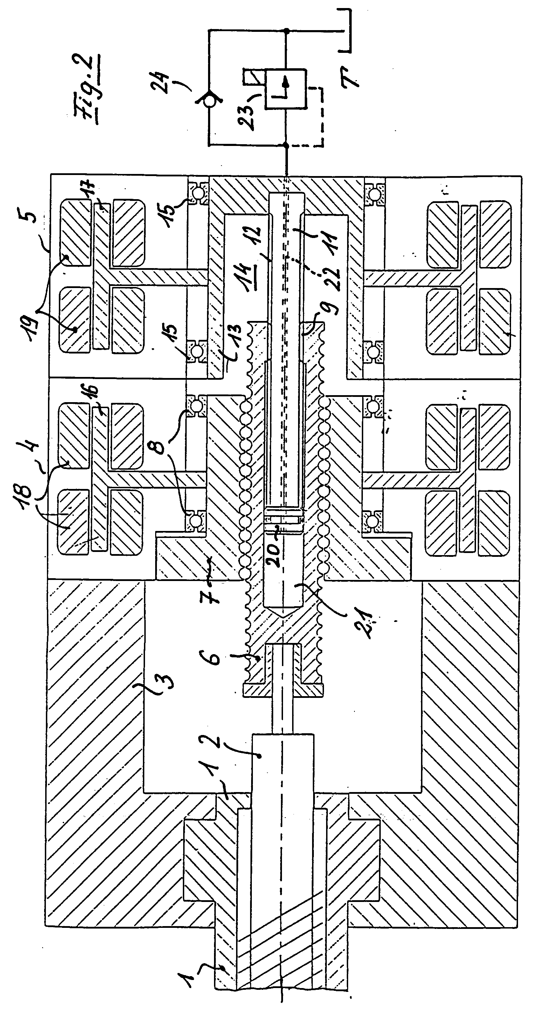

Eine Ausführungsform der Erfindung wird anhand der Figur 2 näher erläutert. Es zeigt:
- Fig. 1: einen schematischen Längsschnitt durch den Antriebsteil des Einspritzaggregates einer Spritzgießmaschine und
- Fig. 2: eine erfindungsgemäße Ausführungsform nach Fig. 1, jedoch mit einer hydraulischen Zusatzeinrichtung zur Sicherstellung des gewünschten Staudruckes.

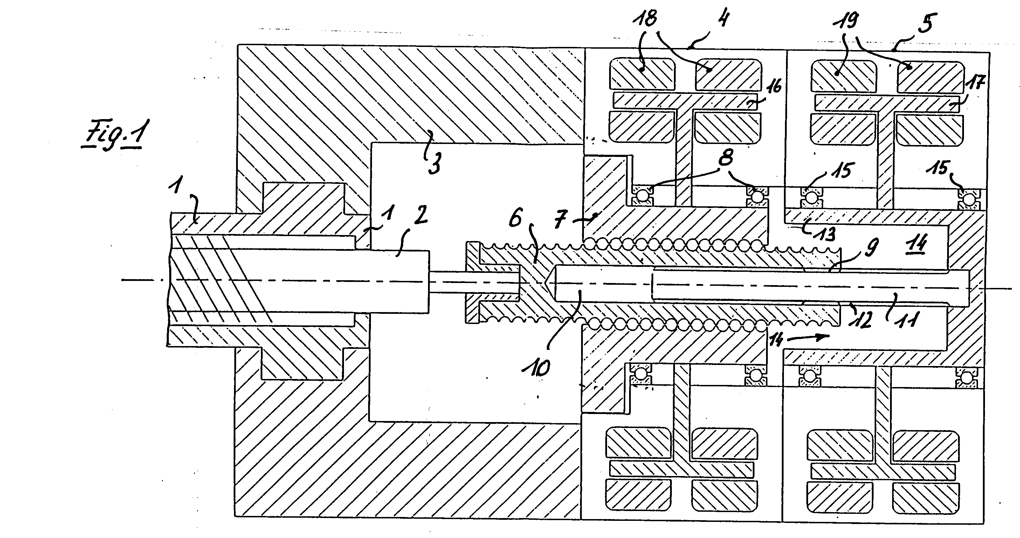

Die Fig. 1 zeigt die rückwärtigen Teilstücke des Schneckenzylinders 1 und der darin gelagerten Schnecke 2 einer ansonsten nicht näher dargestellten Spritzgießmaschine. Der Schneckenzylinder 1 ist in einem Gehäuse 3 angeordnet an dem ein erster 4 und ein zweiter Hohlwellenmotor 5 befestigt sind. Die Schnecke 2 ist mit einer Bewegungsspindel 6 fest verbunden, die in einer Spindelmutter 7 geführt ist. Es handelt sich hierbei um einen Kugelspindelantrieb. Die Spindelmutter 7 ist die Hohlwelle des ersten Hohlwellenmotors 4 die mittels einer Axiallagerung 8 direkt im Motorgehäuse abgestützt ist.

In eine mit Axialnuten 9 versehenen Ausnehmung 10 der Bewegungsspindel 6 ragt ein Antriebszapfen 11, der ebenfalls mit Axialnuten 12 versehen ist und somit mit der Bewegungsspindel 6 drehfest aber axial verschieblich gekoppelt ist. Der Antriebszapfen 11 ist mit der Hohlwelle 13 des zweiten Hohlwellenmotors 5 fest verbunden, die den Antriebszapfen 11 unter Freilassung eines Ringraumes 14 umgibt. Die Hohlwelle 13 ist mittels einer Axiallagerung 15 direkt im Motorgehäuse abgestützt.

Die Hohlwellenmotore 4 und 5 sind Transversalflußmotore mit zylindrischen Magneten 16 und 17, die jeweils beidseitig von Wicklungen 18 und 19 umgeben sind.

In der erfindungsgemäßen Ausführungsform nach Fig. 2 ist der Antriebszapfen 11 mit einem Kolben 20 ausgestattet, der in einem Innenzylinder 21 geführt ist. Vom Innenzylinder 21 verläuft durch den Kolben 20 und den Antriebszapfen 11 ein Kanal 22, durch den bei Staudruckbelastung der Schnecke 2 Hydrauliköl aus dem Innenzylinder 21 über ein Druckproportionalventil 23 zu einem Tank T abströmen kann. Bei Rückstellung der Schnecke 2 kann über das als Nachsaugventil fungierende Einwegventil 24 Hydrauliköl in den Innenzylinder 21 zurückgesaugt werden.

Im Betrieb führt die Schnecke 2 prinzipiell zwei Bewegungen aus. Beim Einspritzen wird die Schnecke axial nach vorne geschoben und rotiert nicht. Beim Plastifizieren rotiert die Schnecke 2 und wird durch das aufplastifizierte und in den Schneckenvorraum (nicht dargestellt) geförderte Material axial nach hinten geschoben. Dabei wird eine definierte Gegenkraft (Staudruck) aufgebracht.

Beim Einspritzen und Plastifizieren werden die Hohlwellenmotore 4 und 5 in der nachfolgend beschriebenen Abfolge betrieben.

### Einspritzen:

Der erste Hohlwellenmotor 4 dreht die Spindelmutter 7 und die Schnecke 2 wird axial (in Fig. 1 und 2 nach links) verschoben. Der zweite Hohlwellenmotor 5 bleibt drehfest stehen.

### Plastifizieren:

Der zweite Hohlwellenmotor 5 dreht die Schnecke 2 über den Antriebszapfen 11 mit der erforderlichen Plastifizierdrehzahl.

Der erste Hohlwellenmotor 4 dreht mit annähernd gleicher Drehzahl wie der zweite Hohlwellenmotor 5. Aus der Drehzahldifferenz ergibt sich die Rücklaufgeschwindigkeit der Schnecke 2.

## Patentansprüche

1. Einspritzaggregat für eine Spritzgießmaschine zur Verarbeitung von thermoplastischem Material mit im wesentlichen einem Schneckenzylinder (1), einer Schnecke (2) und einem aus zwei Elektromotoren (4,5) bestehenden Schneckenantrieb, von denen ein Motor zur Durchführung der Drehbewegung der Schnecke und ein Motor zur Durchführung der Axialbewegung der Schnecke (2) vorgesehen ist, wobei die beiden Elektromotore (4,5) mit ihren Achsen fluchtend zur Achse der Schnecke (2) angeordnet sind und als Hohlwellenmotoren (4,5) ausgebildet sind und wobei beim ersten Hohlwellenmotor (4), dessen Gehäuse an dem Gehäuse (3) befestigt ist, in dem der Schneckenzylinder (1) angeordnet ist, eine Spindelmutter (7) in der Hohlwelle befestigt ist, die mit einer Bewegungsspindel (6) im Gewindeeingriff steht, die an einem Ende mit der Schnecke (2) verbunden ist, **dadurch gekennzeichnet,** daß die Bewegungsspindel (6) am anderen Ende von einem Antriebszapfen (11) durchsetzt ist, der mit Axialnuten (12) in entsprechend ausgebildeten Axialnuten im Inneren der Bewegungsspindel (6) in Eingriff steht, wobei der Antriebszapfen (11) mit der Hohlwelle (13) des zweiten Hohlwellenmotors (5) verbunden ist, und daß die Bewegungsspindel (6) einen mit Hydraulikflüssigkeit gefüllten Innenzylinder (21) aufweist, in dem ein am Ende des Antriebszapfens (11) angeordneter Kolben (20) geführt ist, wobei durch den Kolben (20) und durch den Antriebszapfen (11) ein nach außen führender Kanal (22) verläuft, durch den bei auf die Schnecke (2) wirkender Staudruckbelastung Hydraulikflüssigkeit über ein Druckproportionalventil (23) zu einem Tank T strömen kann, aus dem bei entgegengesetzt gerichteter Schneckenbewegung Hydrauliköl über ein Einwegventil (24) zurückgesaugt werden kann.

2. Einspritzaggregat nach Anspruch 1, **dadurch gekennzeichnet,** daß die Spindelmutter (7) die mit dem Anker des ersten Hohlwellenmotors (4) fest verbundene Hohlwelle ist, und daß die Hohlwelle (13) des zweiten Hohlwellenmotors (5) unter Freilassung eines Ringraumes (14) für den Eintritt der Bewegungsspindel (6) mit dem Antriebszapfen (11) fest verbunden ist.

3. Einspritzaggregat nach Anspruch 2, **dadurch gekennzeichnet,** daß die Axiallagerung (8) für die von der Spindelmutter (7) übertragenen Axialkräfte im Hohlwellenmotor (4) integriert ist.

4. Einspritzaggregat nach einem der Ansprüche 1 bis 3, **dadurch gekennzeichnet,** daß jeder Hohlwellenmotor (4,5) ein Transversalflußmotor mit einem zylindrischen, beidseitig von Wicklungen (18,19) umgebenen Magneten (16,17) ist.

5. Einspritzaggregat nach einem der Ansprüche 1 bis 4, **dadurch gekennzeichnet,** daß die beiden Motore (4,5) nach Maßgabe von den Schmelzezustand im Schneckenzylnder repräsentierenden Regelsignalen mit Differenzdrehzahl antreibbar sind.

## Claims

1. Injection unit for an injection moulding machine for processing thermoplastics material with essentially a worm cylinder (1), a worm (2) and a worm drive consisting of two electric motors (4, 5), whereof one motor is provided for carrying out the rotary movement of the worm and one motor is provided for carrying out the axial movement of the worm (2), in which case the two electric motors (4, 5) being arranged with their axes aligned with the axis of the worm (2) and being constructed as hollow shaft motors (4, 5) in which case in the first hollow shaft motor (4), whereof the housing is attached to the housing (3), in which the worm cylinder (1) is located, a spindle nut (7) is fastened in the hollow shaft, which is in threaded engagement with a movement spindle (6), which is connected at one end to the worm (2), characterized in that at the other end a drive journal (11) passes through the movement spindle (6), which journal engages by axial grooves (12) in correspondingly constructed axial grooves inside the movement spindle (6), the drive journal (11) being connected to the hollow shaft (13) of the second hollow shaft motor (5) and that the movement spindle (6) comprises an inner cylinder (21) filled with hydraulic fluid, in which cylinder a piston (20), located at the end of the drive journal (11), is guided, in which case a channel (22) leading outwards extends through the piston (20) and through the drive journal (11), through which, in the case of a dynamic pressure load acting on the worm (2), hydraulic fluid may flow by way of a pressure proportional valve (23) to a tank (T), from which, in the case of an oppositely directed worm movement, hydraulic oil can be sucked back by way of a one-way valve (24).

2. Injection unit according to Claim 1, characterized in that the spindle nut (7) is the hollow shaft securely connected to the armature of the first hollow shaft motor (4), and that the hollow shaft (13) of the second hollow shaft motor (5) is securely connected to the drive journal (11) leaving an annular space (14) for the entry of the movement spindle (6).

3. Injection unit according to Claim 2, characterized in that the axial bearing for the axial forces to be transmitted by the spindle nut (7) is integrated in the hollow shaft motor (4).

4. Injection unit according to one of Claims 1 to 3, characterized in that each hollow shaft motor (4, 5) is a transverse flow motor with a cylindrical magnet (16, 17) surrounded on both sides by windings (18, 19).

5. Injection unit according to one of Claims 1 to 4, characterized in that the two motors (4, 5) can be driven at a differential speed in accordance with control signals representing the molten state in the worm cylinder.

## Revendications

1. Ensemble d'injection pour machine à mouler par injection, destiné à la transformation de matière thermoplastique, ensemble comportant essentiellement un cylindre (1) de vis, une vis (2) et un dispositif d'entraînement de vis constitué de deux moteurs électriques (4, 5), dont l'un des moteurs est prévu pour l'exécution du mouvement de rotation de la vis, et dont l'autre moteur est prévu pour l'exécution du déplacement axial de la vis (2), les deux moteurs électriques (4, 5), ayant leurs axes alignés avec l'axe de la vis (2), et ayant une conformation de moteurs (4, 5) à arbre creux, et dans le premier moteur (4) à arbre creux, dont le corps est fixé au corps (3) dans lequel est disposée la vis (2), un écrou (7) pour broche filetée étant fixé dans l'arbre creux qui est en prise par filetage avec une broche filetée d'entraînement (6), qui est reliée à une de ses extrémités à la vis (2), **caractérisé en ce que** la broche filetée d'entraînement (6) est traversée à l'autre extrémité par un demi-arbre d'entraînement (11) qui est en prise au moyen de rainures axiales (12) dans des rainures axiales conformées de façon correspondante, situées à l'intérieur de la broche filetée d'entraînement (6), le demi-arbre d'entraînement (11) étant relié à l'arbre creux (13) du deuxième moteur (5) à arbre creux, et caractérisé en ce que la broche filetée d'entraînement (6) présente un cylindre intérieur (21), rempli de liquide hydraulique et dans lequel est guidé un piston (20) disposé à l'extrémité du demi-arbre (11), un passage (22) conduisant à l'extérieur s'étendant en traversant le piston (20) et le demi-arbre (11) d'entraînement, par lequel passage (22), lorsqu'une contrainte de pression de barrage agit sur la vis (2), du liquide hydraulique peut s'écouler, par l'intermédiaire d'une valve (23), fonctionnant proportionnellement à la pression, jusqu'à un réservoir T, à partir duquel de l'huile hydraulique peut être aspirée en sens inverse, par l'intermédiaire d'une valve unidirectionnelle (24).

2. Ensemble d'injection selon la revendication 1, **caractérisée en ce que** l'écrou (7) de vis est l'arbre creux relié solidement à l'induit du premier moteur (4) à arbre creux, et caractérisé en ce que l'arbre creux (13) du second moteur (5) à arbre creux, est fixé solidement au demi-arbre d'entraînement (11) en laissant libre un espace annulaire (14) destiné à la pénétration de la broche filetée (6) d'entraînement.

3. Ensemble d'injection selon la revendication 2, **caractérisé en ce que** le support axial (8) destiné aux forces axiales transmises par l'écrou (7) pour broche filetée est intégré dans le moteur (4) à arbre creux.

4. Ensemble d'injection selon l'une des revendications 1 à 3, **caractérisé en ce que** chaque moteur (4, 5) à arbre creux est un moteur à flux transversal comportant un aimant cylindrique (16, 17) entouré des deux côtés par des enroulements (18, 19).

5. Ensemble d'injection selon l'une des revendications 1 à 4, **caractérisé en ce que** les deux moteurs (4, 5) peuvent être entraînés à des vitesses de rotation différentes, en fonction de signaux de régulation représentant l'état de la matière fondue dans le cylindre de vis.
